# EUROPEAN PATENT APPLICATION

(11) **EP 4 398 173 A1**
(43) Date of publication of application: **10.07.2024**
(21) Application number: 23305013.7
(22) Date of filing: 05.01.2023
(51) Int. Cl.: G06Q 20/06, G06Q 20/32, G06Q 20/34, G06Q 20/36, G06Q 20/40, G07F 7/12, H04L 9/08, H04L 9/32

(54) **METHOD FOR MANAGING A BATCH OF SECURE ELEMENTS**

(71) Applicant: THALES DIS FRANCE SAS, 92190 Meudon (FR)
(72) Inventor: DURAND, Stéphane, 78140 Vélizy Villacoublay (FR)
(74) Representative: Grevin, Emmanuel

(57) **Abstract**

The invention is a method for managing a batch of secure elements comprising their own temporary trust code. When a point-to-point transaction occurs between a first and a second secure elements (22, 23), of the batch, the first secure element computes a result of a one-way cryptographic function applied to the temporary trust code stored in the first secure element, then sends to the second secure element a transaction message (30) comprising the result and a transaction data. Following receipt of the transaction message, the second secure element performs a temporary trust code control to verify whether the result has been computed using a temporary trust code equal to the temporary trust code stored in the second secure element. If the temporary trust code control is positive, the second secure element accepts the point-to-point transaction, else depending on a risk assessment performed by the second secure element, transaction is rejected or accepted.

## Description

### (Field of the invention)

The present invention relates to methods for managing a batch of hardware secure elements. It relates particularly to methods for managing point-to-point transactions between two hardware secure elements.

### (Background of the invention)

In the context of an increasing interest of central banks towards Central Bank Digital Currencies, (CBDC), some propositions for CBDC rely on hardware secure devices that are usable without network connectivity, while others proposition rely on secure devices requiring online-only schemes.

The present document focuses on propositions for CBDC relying on hardware secure devices that are usable without network connectivity (I.e. in offline mode). Although hardware secure devices are supposed to implement a large panel of security measures, the possibility of defrauded secure devices remains possible on the field.

A central transaction collector (CTC) may be in charge of collecting history of offline transactions. carried out by secure devices. Although secure devices can handle offline transactions, they are supposed to periodically connect the CTC and upload their transaction logs, for example when they have reach a ceiling on their capacity.

There is need to the CTC to limit offline transactions made by malevolent secure devices.

The invention aims at solving the above mentioned technical problem.

### (Summary of the Invention)

Based on the retrieved transaction logs, the CTC can detect fraudulent secure devices by performing correlation checks across the offline transactions.

When a defrauded secure device is detected, the CTC can put it in a blacklist and propagate the blacklist to as much as possible secure devices of the fleet. Unfortunately, the sending of the blacklist can be performed only for secure devices that connect the CTC and such a connection depends on behavior of each secure device. In addition, it could happen that the size of the blacklist exceeds the memory size of the secure devices. That is why the invention proposes a solution in which the secure elements do not store the blacklist.

An object of the present invention is a method for managing a batch of hardware secure elements comprising their own temporary trust code. When a trusted point-to-point transaction occurs between a first and a second secure elements, both belonging to the batch, the first secure element computes a result of a one-way cryptographic function applied to the temporary trust code stored in said first secure element, then sends to the second secure element a transaction message comprising said result and a transaction data. Following receipt of the transaction message, the second secure element performs a temporary trust code control to verify whether the result has been computed using a temporary trust code equal to the temporary trust code stored in the second secure element. If the temporary trust code control is positive, the second secure element accepts the point-to-point transaction. If the temporary trust code control is negative, depending on a risk assessment performed by the second secure element, the second secure element rejects or accepts the point-to-point transaction.

Advantageously, the central transaction collector, (CTC) may set a reference trust code then initializes the temporary trust code of all secure elements of the batch with said reference trust code. The CTC may maintain a blacklist of secure elements deemed to be compromised. When a predefined event occurs, the CTC may update the reference trust code with a different value. When an online channel is established between the CTC and a connected secure element belonging to the batch, the CTC may send the reference temporary trust code to the connected secure element only if the secure element does not belong to the blacklist.

Advantageously, when said online channel is established between the CTC and said connected secure element, the CTC may retrieve the transaction log of the connected secure element and apply a correlation check to the retrieved transaction log. If the correlation check shows that the connected secure element is fraudulent, then the CTC may include the connected secure element in the blacklist.

Advantageously, the one-way cryptographic function may be a message authentication code (MAC) function taking as input parameters both the temporary trust code and said transaction data.

Advantageously, the predefined event may be a detection of a fraudulent secure element by the central transaction collector.

Advantageously, the predefined event may be a preset timer.

Advantageously, the CTC may assign a version to the reference trust code and generate a signed version assigned the reference trust code. Each time the CTC provisions a secure element of the batch, the CTC may send both the reference trust code and the signed version assigned to the reference trust code. The first secure element may include in the transaction message the signed version assigned to its own temporary trust code. If the temporary trust code control is negative, the second secure element may use the received signed version and the signed version assigned to its own temporary trust code for performing the risk assessment.

Advantageously, the second secure element may keep a history of temporary trust codes provisioned by the CTC and if the temporary trust code control is negative, the second secure element may use the history for performing the risk assessment.

Advantageously, the CTC may assign a timestamp to the reference trust code. The second secure element may comprise an evolution velocity indicator reflecting the average frequency of reference trust code changes. Each time the CTC provisions a secure element of the batch with the reference trust code, the CTC may send the timestamp assigned to reference trust code and if the temporary trust code control is negative, the second secure element may use both the evolution velocity indicator and the timestamp assigned to its own temporary trust code for performing the risk assessment.

Advantageously, each secure element of the batch may comprise their own purse balance of a digital currency and their own transaction log. The point-to-point transaction may be a transfer of value from the first secure element acting as a payer to the second secure element acting as payee. If the second secure element accepts the point-to-point transaction, the second secure element may update both its own transaction log and an internal representation of its own purse balance with said transaction information.

Advantageously, each of the secure elements of the batch may be one of the following types: smart card, ring, keychain and bracelet.

Another object of the present invention is a system comprising a batch of hardware secure elements comprising their own temporary trust code. When a trusted point-to-point transaction occurs between a first and a second secure elements, both belonging to the batch, the first secure element is configured to compute a result of a one-way cryptographic function applied to the temporary trust code stored in said first secure element, then to send to the second secure element a transaction message comprising said result and a transaction data. Following receipt of the transaction message, the second secure element is configured to perform a temporary trust code control to verify whether the result has been computed using a temporary trust code equal to the temporary trust code stored in the second secure element. If the temporary trust code control is positive, the second secure element is configured to accept the point-to-point transaction. If the temporary trust code control is negative, depending on a risk assessment performed by the second secure element, the second secure element is configured to reject or accept the point-to-point transaction.

Advantageously, the system may comprise a central transaction collector (CTC), configured to set a reference trust code then to initialize the temporary trust code of all secure elements of the batch with said reference trust code. The CTC may be configured to maintain a blacklist of secure elements deemed to be compromised. When a predefined event occurs, the CTC may be configured to update the reference trust code with a different value. When an online channel is established between the CTC and a connected secure element belonging to the batch, the CTC may be configured to provision the connected secure element with the reference temporary trust code only if the secure element does not belong to the blacklist.

Advantageously, when said online channel is established between the CTC and said connected secure element, the CTC may be configured to retrieve the transaction log of the connected secure element and to apply a correlation check to the retrieved transaction log. If the correlation check shows that the connected secure element is fraudulent, then the CTC may be configured to include the connected secure element in the blacklist.

Advantageously, each secure element of the batch may comprise their own purse balance of a digital currency and their own transaction log. The point-to-point transaction may be a transfer of value from the first secure element acting as a payer to the second secure element acting as payee. If the second secure element accepts the point-to-point transaction, the second secure element may be configured to update both its own transaction log and its own purse balance with said transaction information.

### (Brief description of the drawings)

Other characteristics and advantages of the present invention will emerge more clearly from a reading of the following description of a number of preferred embodiments of the invention with reference to the corresponding accompanying drawings in which:
Fig. 1 shows a first exemplary flow diagram for managing a batch of secure elements according to an example of the invention; and
Fig. 2 shows a diagram of architecture of a system for managing a batch of secure elements according to an example of the invention.

### (Detailed description of the preferred embodiments)

The invention may apply to any type of hardware secure element. The invention is well suited for smart cards and can also apply to physical secure elements having a different form factor like a ring, a key fob or a bracelet.

Smart cards are portable small devices comprising a memory, a microprocessor and an operating system for computing treatments. They may comprise services applications like Payment, Access or Telecom applications. Such smart cards may comprise a plurality of memories of different types, like non-volatile memory and volatile memory. They are considered as tamper-resistant (or "secure") because they are able to control the access to the data they contain and to authorize or not the use of data by other machines. A smartcard may also provide computation services based on cryptographic components. In general, smartcards have limited computing resources and limited memory resources and they are intended to connect a host machine that provides them with electric power either in contact mode or in contactless mode. Some smart card have their own embedded energy source.

Contact smart cards are usually designed to communicate according to at least one contact protocol like ISO/IEC7816 T=0 or T=1 communication protocols. Contactless smart cards are designed to communicate according to at least one contactless protocol like a protocol defined by ISO/IEC 14443 standard.

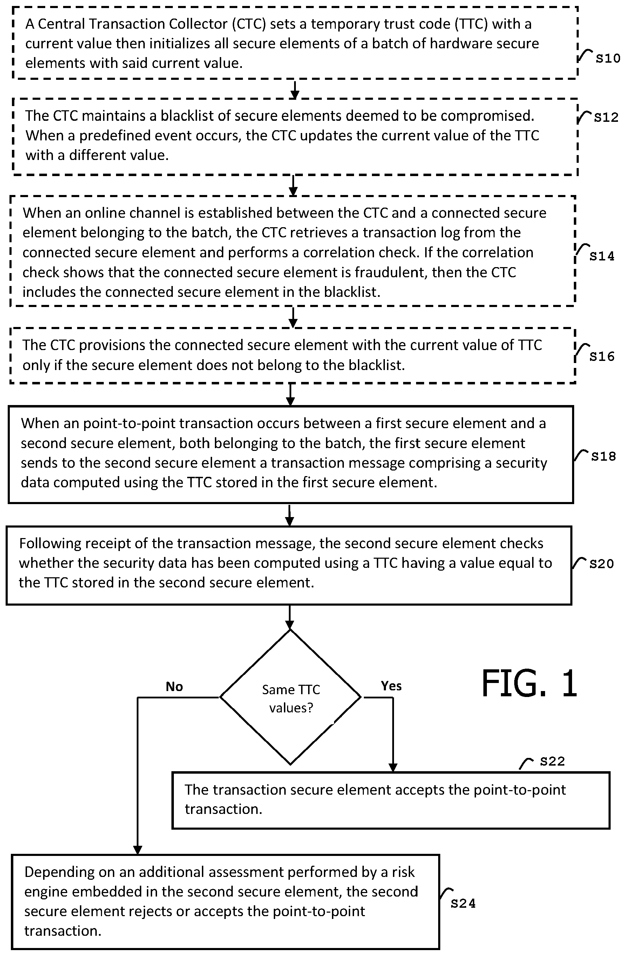

Figure 1 depicts an exemplary flow diagram for managing a batch of secure elements according to an example of the invention.

Each secure element of the batch can act as a requester or a requestee during a transaction between two secure elements.

In this example, a batch (or fleet) of hardware secure elements handling digital currency is deployed on the field. Usually, each hardware secure element of the batch is assigned to an individual. In some cases, more than one secure element can be assigned to a single individual.

Each hardware secure element comprises its own purse balance, its own offline transaction log, its own temporary trust code and a risk engine. The secure elements are able to carry out point-to-point transactions in pairs. These point-to-point transactions are considered offline because they do not require a connection to the Central Transaction Collector. Typically, a payer secure element transfers a money amount to a payee secure element so that the purse balance stored in the payer secure element is decreased by the amount of the transaction and the purse balance stored in the payee secure element is increased by the same amount. It could be noted that each secure element can store a specific internal representation of its own purse balance. For instance, the purse balance can be stored in a single field or recomputed from a plurality of source tokens.

The payer secure element updates its own offline transaction log with transaction data (like the amount, the identity of the payee secure element and the date for instance) and the payee secure element updates its own offline transaction log with transaction data. In such a case, the payer secure element acts as a requester and the payee secure element acts as a requestee.

A Central Transaction Collector (CTC) is in charge of updating the temporary trust code of all trusted secure elements of the batch. The Central Transaction Collector is in charge of retrieving the offline transaction log of the secure elements that connect the CTC and to perform a reconciliation of the transaction data extracted from the retrieved offline transaction logs.

The secure elements of the batch are able to connect the Central Transaction Collector through so-called online sessions to exchange data with the CTC.

For the sake of simplicity, steps involving the Central Transaction Collector (CTC) are presented first.

At step S10, the central transaction collector 10 sets a reference trust code 11 with an initial value then initializes the temporary trust code of all secure elements of the batch with the initial value of the reference trust code. The CTC stores the reference trust code 11 in its memory.

At step S12, the central transaction collector 10 maintains a blacklist 12 of secure elements deemed to be compromised. The CTC stores the blacklist 12 in its memory. Initially, the blacklist is assumed to be empty. The blacklist can be gradually filled with the identifiers of the secure elements deemed to be hacked

When a predefined event occurs, the central transaction collector 10 updates the reference trust code 11 with a new value different from the current value of the reference trust code. In some embodiments, the central transaction collector 10 may generate a random string or number for setting the new value of the reference trust code 11. Alternatively, the CTC may use a cryptographic function to generate the new value.

At step S14, when an online channel is established between the Central Transaction Collector and a connected secure element, the CTC may retrieve the offline transaction log of the connected secure element and may apply a correlation check to the retrieved transaction log. If the correlation check shows that the connected secure element is fraudulent, then the Central Transaction Collector may include the connected secure element in the blacklist 12.

In addition, the Central Transaction Collector can declare a fraudulent secure element in the blacklist 12 when another entity (like a police officer) reports the secure element as being hacked.

At step S16, when an online channel is established between the Central Transaction Collector and a connected secure element belonging to the batch, the Central Transaction Collector provisions the connected secure element with the current value of the reference temporary trust code only if the secure element does not belong to the blacklist. The connected secure element updates its own temporary trust code with the received value of the reference temporary trust. Consequently, secure elements listed in the blacklist 12 do not receive updates of their temporary trust code from the CTC. In other words, they cannot resynchronize their own temporary trust code with the reference trust code of the CTC.

At step S18, when a trusted point-to-point transaction occurs between two secure elements belonging to the batch, the payer secure element computes a result of a one-way cryptographic function applied to its own temporary trust code (i.e. stored in the memory of the payer secure element). Then the payer secure element sends to the payee secure element a transaction message 30 comprising the computed result and applicative data specific to the transaction. The applicative data may include a money amount, a date, a transaction number, and an identifier of the payer secure element.

At step S20, following receipt of the transaction message 30, the payee secure element performs a temporary trust code control to verify whether the result (of the one-way cryptographic function) has been computed using a temporary trust code whose value is equal to the value of the temporary trust code stored in the payee secure element. The payee secure element may send to the payer secure element a message acknowledging acceptation of the transaction so that the payer secure element can update its on purse balance and transaction log.

If the temporary trust code control is successful, the payee secure element accepts the point-to-point transaction and updates both its own purse balance and its own transaction log with the transaction data at step S22.

If the temporary trust code control is negative, depending on a risk assessment performed by the payee secure element, the payee secure element can reject or accept the point-to-point transaction at step S24.

In some embodiments, the CTC may assign a version to the reference trust code and sign the version assigned the reference trust code. Each time the CTC provisions a secure element of the batch, the CTC may send both the reference trust code and the signed version that is assigned to the reference trust code. Upon receipt of the reference trust code, the secure element may be configured to update its own temporary trust code and assign the received signed version to its own temporary trust code. During a point-to-point transaction, the payer secure element may include in the transaction message 30 the signed version assigned to its own temporary trust code. If the temporary trust code control is negative, the payee secure element may use the received signed version and the signed version assigned to its own temporary trust code for performing the risk assessment.

For instance, the payee secure element may accept the transaction if the version received from the payer secure element is newer than the version assigned to its own temporary trust code.

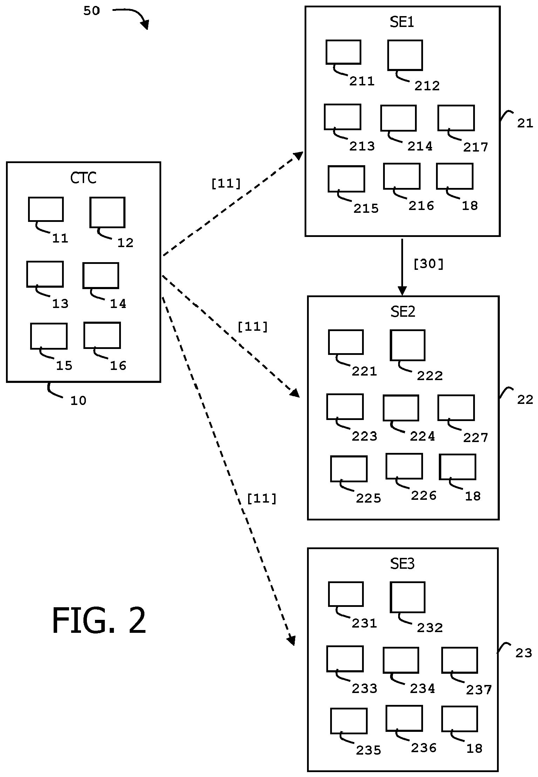

Figure 2 depicts a diagram of architecture of a system 50 according to an example of the invention.

In this example, the system comprises a batch of three secure elements 21, 22 and 23 designed to manage their own purse of digital currency. Each secure element may be a smart card embedding both a battery, a display and a keypad.

Each secure element of the batch comprises a secure chip, a first physical communication interface designed to exchange data with another secure element of the batch and a second physical communication interface designed to exchange data with a central transaction collector (CTC) 10. The first communication interface may be designed to exchange data through a wireless channel. For instance, the first communication interface may be compliant with Bluetooth Low Energy^{©} (BLE), Wi-Fi or NFC (Near Field Communication) technology. The second physical communication interface may be designed to exchange data with a reader through a wired or wireless channel. For instance, the second communication interface may be compliant with ISO/IEC7816 standard or ISO/IEC14443 standard.

In some embodiments, the first and second communication interfaces may be merged in a single communication interface.

A secure element may rely on a physical terminal embedding the appropriate communication interfaces for establishing a link between the secure element and the CTC. The physical terminal may host a local agent that can facilitate the communication between the secure element using the aforementioned communication interface/protocols and with the CTC using IP connectivity (Ethernet, Wi-Fi, GSM... + HTTP /TCP, UDP for instance).

The local agent can be a piece of software running on the physical terminal that has input/output interfaces (like a display and a keyboard) for the users. The physical terminal may be a smartphone.

In some embodiments, a secure element behaves as a pure slave responding to requests of the physical terminal.

The local agent can orchestrate the communication between the parties involved in a transaction: the user(s), the payer SE, the payee SE, and when appropriate, the CTC or any other required party.

The secure chip of a secure element comprises a hardware processor and a non-volatile memory (not shown). The non-volatile memory stores an operating system that includes software instructions that are executed by the processor to perform the features of the secure chip. The secure element may be based on a conventional smart card chip with additional features.

The secure element 21 comprises its own purse balance 217, its own offline transaction log 214, a purse manager 216, its own temporary trust code 211 and a risk engine 215.

Similarly, the secure element 22 comprises its own purse balance 227, its own offline transaction log 224, a purse manager 226, its own temporary trust code 221 and a risk engine 225. Likewise, the secure element 23 comprises its own purse balance 237, its own offline transaction log 234, a purse manager 236, its own temporary trust code 231 and a risk engine 235.

A CTC 10 has initialized the temporary trust code of the secure elements 21, 22 and 23 with an initial value during a preliminary phase. Depending on the history of each secure element, its temporary trust code may have been updated by the CTC once or several times.

When the secure elements 21 and 22 starts a trusted point-to-point transaction together, the secure element 21 is configured to compute a result of a one-way cryptographic function applied to its own temporary trust code 221 stored in the secure element 21. For instance, the one-way cryptographic function may be a Message Authentication Code (MAC) algorithm or a Hash function.

In some embodiments, transaction data is used as input parameter (in addition to the temporary trust code 221) of the one-way cryptographic function to generate the result. The purse manager 216 can generate the result by executing the one-way cryptographic function.

Then the secure element 21 is configured to send to the secure element 22 a transaction message 30 comprising the computed result and a transaction data.

Upon receipt of the transaction message, the secure element 22 is configured to perform a temporary trust code control to verify whether the received result has been computed using a temporary trust code equal to the temporary trust code 221 stored in the secure element 22. The purse manager 226 can perform the temporary trust code control.

The secure element 22 is configured to accept the point-to-point transaction if the temporary trust code control is positive. The purse manager 226 can update the purse balance 227 and the transaction log 224 (both stored in the secure element 22) with transaction data.

The secure element 22 can be configured to apply a further risk assessment if the temporary trust code control is negative. Depending on the result of the risk assessment, the secure element 22 can be configured to reject or accept the point-to-point transaction.

In some embodiments, the secure element 21 comprises its own private key 212 and a certificate 213 provided by an authority which signed the public counterpart of the private key 212. Similarly, the secure element 22 comprises its own private key 222 and a certificate 223 provided by the authority which signed the public counterpart of the private key 222. Likewise, the secure element 23 may comprise its own private key 232 and a certificate 233 provided by the authority which signed the public counterpart of the private key 232.

When a point-to-point transaction (i.e. an offline transaction without connectivity with the CTC) occurs between the secure elements 21 (as payer) and 22 (as payee), they can apply the following sequence:
a) The secure elements mutually authenticate themselves through their certificates and private keys.
b) They exchange data to define details of the payment.
c) The payer secure element signs the transaction data with its own private key 212, and generates a message authentication code based on its own temporary trust code 221. Then the payer secure element sends to the payee secure element 22 a transaction message 30 comprising both the signed transaction data and the message authentication code.
d) On the receiving side, the payee secure element perform the temporary trust code control: It detects if the payer secure element is synchronized with the same value/version of temporary trust code by trying to validate the received message authentication code using its own temporary trust code 221.

If the temporary trust code control fails, the payee secure element can perform a risk assessment based on number of parameters.

The above-presented embodiments can be combined.

In some embodiments, the system 50 can include the central transaction collector 10. The central transaction collector (CTC) can be configured to set a reference trust code 11 and to initialize the temporary trust code of all secure elements of the batch with this reference trust code. The CTC can comprise a blacklist manager 14 adapted to store and maintain a blacklist 12 of secure elements (belonging to the batch) deemed to be compromised. The blacklist may contain an identifier of the secure elements that are considered to have been hacked and no longer trustworthy.

The CTC can comprise a code generator 13 configured to update the reference trust code 11 with a new (i.e. different) value when a predefined event occurs. In some examples, the predefined event may be the detection of a fraudulent secure element by the central transaction collector. In some examples, the predefined event can be a preset timer, such as every 5 days or every month for example. In some examples, the CTC can be configured to update the reference trust code 11 both when the timeout is reached (i.e. preset timer) and when a fraudulent secure element is detected or reported to the CTC.

When an online channel is established between the CTC 10 and a connected secure element belonging to the batch, the CTC can be configured to provision the connected secure element with the reference trust code only if the connected secure element does not belong to the blacklist. The temporary trust code stored in the connected secure element is updated with the received reference trust code.

The CTC can comprise a storage area 15 for online and offline transactions and a transaction verifier 16. When an online channel is established between the CTC and a connected secure element, the CTC can retrieve the transaction log stored in the connected secure element. Then the transaction verifier 16 can apply a correlation check to the retrieved transaction log. Typically, such correlation check may include a verification of the content of the transaction log taken in isolation. The correlation check may also include a verification of the consistency of the transaction log data with the transaction histories retrieved from other secure elements of the batch. Thus, the CTC can detect that the recovered transaction log is tainted with irregularities and place the identifier of the connected secure element in the blacklist. Thus, if the correlation check shows that the connected secure element is fraudulent, then the CTC includes the connected secure element in the blacklist 12.

In some embodiments, the payee secure element can take into account the time elapsed since its last connection to the CTC for executing the risk assessment. For instance, if this duration is longer than 30 days and the transaction amount is less than 20 Euros, the payee secure element can accept the transaction.

In some embodiment, the CTC 10 can assign a timestamp to the reference trust code and each time the CTC provisions a secure element of the batch with the reference trust code, the CTC sends the timestamp assigned to reference trust code so that the secure element stores both the timestamp associated with its own temporary trust code. All secure elements of the batch may comprise an evolution velocity indicator 18 reflecting the average frequency of reference trust code changes.

The payee secure element 22 can comprise a real time clock (RTC) so that the payee secure element is able to date a point-to-point transaction.

When the temporary trust code control is negative, the payee secure element 22 can use both the evolution velocity indicator 18 and the timestamp assigned to its own temporary trust code for performing the risk assessment. For instance, assuming that the timestamp is set to 2:19 p.m. on September 12, 2023 (2023/09/27-14:19), that the evolution velocity indicator is set to 10 days and the point-to-point transaction occurs on November 23, 2023 at 3:30 p.m. The risk engine 225 of the payee secure element may be configured to consider that the reference trust code has changed too many times on CTC side since its own temporary trust code was updated by the CTC and to reject the point-to-point transaction.

In some embodiment, the payee secure element may keep the history of previous temporary trust codes provisioned by the CTC. For example, the payee secure element may keep the value of the last five temporary trust codes. If the temporary trust code control is negative, the payee secure element may use the temporary trust code history for performing the risk assessment by searching whether one of the temporary trust code of the history matches the temporary trust code used by the payer. Thus, the payee secure element can accept the transaction in case of successful match with one of the last five temporary trust codes.

In some embodiments, the secure elements of the batch may comprise a symmetric key instead of certificates and private keys and may be configured to mutually authenticate using the symmetric key.

Although presented for a smart card, some embodiments of the invention may also apply to hardware secure elements having various form factors. For instance, a secure element may be a ring, a bracelet, a keychain or a microchip inserted under the skin.

Although presented for hardware secure elements managing financial transactions through digital currency wallets, some embodiments of the invention may also apply to secure elements managing other type of point-to-point transactions. For instance, the invention can apply to a batch of secure elements able to perform transactions aiming at requesting access to a physical area or resource, alight mobility fleet sharing (e.g. electric scooters), redeeming loyalty points or transferring credentials. For example, the invention could apply to secure elements designed to perform transactions aiming exchanging credits/rights/points associated with a game.

Thanks to some embodiments of the invention, a reference trust code is shared by the CTC with a subset of the secure elements that store the value of the reference trust code in their own temporary trust code. By changing the value of the reference trust code over time, some embodiments of the invention allow to check whether some secure elements are synchronized against a same context. Once detected as a hacked secure element, a bad secure element which is declared in the blacklist will never get the further updated reference trust code and thus will be removed from the circle of trust established by sharing the common reference trust code.

It is to be noted that thanks to the use of the one-way cryptographic function, a secure element cannot get the current value of the temporary trust code of another secure element.

Some embodiments of the invention encourage secure elements to connect to the central transaction collector on a regular basis (or even as often as possible). This is also beneficial to the way the central transaction collector works to reduce the risk of fraud as well as optimize the time window of transactions it works on.

Thanks to some embodiments of the invention, a payee secure element may autonomously apply security checks to accept or reject a point-to-point transaction with a payer secure element without connecting the CTC during the transaction.

The invention is not limited to the described embodiments or examples. In particular, the described features of the presented embodiments may be combined as can be understood by those skilled in the art. The batch may comprise a large number of secure elements having different form factors.

## Claims

1. A method for managing a batch of hardware secure elements (21, 22, 23) comprising their own temporary trust code (211),
wherein when a trusted point-to-point transaction occurs (S18) between a first and a second secure elements (22, 23), both belonging to the batch, the first secure element computes a result of a one-way cryptographic function applied to the temporary trust code stored in said first secure element, then sends to the second secure element a transaction message (30) comprising said result and a transaction data;
wherein following receipt of the transaction message (S20), the second secure element performs a temporary trust code control to verify whether the result has been computed using a temporary trust code equal to the temporary trust code stored in the second secure element;
wherein if the temporary trust code control is positive (S22), the second secure element accepts the point-to-point transaction; and
wherein if the temporary trust code control is negative (S24), depending on a risk assessment performed by the second secure element, the second secure element rejects or accepts the point-to-point transaction.

2. The method according to claim 1, wherein a central transaction collector (10), CTC, sets a reference trust code (11) then initializes the temporary trust code of all secure elements of the batch with said reference trust code (S10);
wherein the CTC maintains a blacklist (12) of secure elements deemed to be compromised;
wherein when a predefined event occurs (S12), the CTC updates the reference trust code (11) with a different value;
wherein when an online channel is established between the CTC and a connected secure element (21) belonging to the batch, the CTC sends the reference temporary trust code to the connected secure element only if the secure element does not belong to the blacklist (S16) .

3. The method according to claim 2, wherein when said online channel is established between the CTC and said connected secure element (21), the CTC retrieves the transaction log (214) of the connected secure element and applies a correlation check to the retrieved transaction log (S14); and
wherein if the correlation check shows that the connected secure element is fraudulent, then the CTC includes the connected secure element in the blacklist.

4. The method according to claim 1 or 2, wherein the one-way cryptographic function is a message authentication code (MAC) function taking as input parameters both the temporary trust code and said transaction data.

5. The method according to claim 2, wherein the predefined event is a detection of a fraudulent secure element by the central transaction collector.

6. The method according to claim 2, wherein the predefined event is preset timer.

7. The method according to claim 2, wherein the CTC assigns a version to the reference trust code and generates a signed version assigned the reference trust code;
wherein, each time the CTC provisions a secure element of the batch, the CTC sends both the reference trust code and the signed version assigned to the reference trust code;
wherein the first secure element includes in the transaction message the signed version assigned to its own temporary trust code; and
wherein if the temporary trust code control is negative, the second secure element uses the received signed version and the signed version assigned to its own temporary trust code for performing the risk assessment.

8. The method according to claim 1, wherein the second secure element keeps an history of temporary trust codes provisioned by the CTC; and
wherein if the temporary trust code control is negative, the second secure element uses the history for performing the risk assessment.

9. The method according to claim 2, wherein the CTC assigns a timestamp to the reference trust code;
wherein the second secure element comprises an evolution velocity indicator (18) reflecting the average frequency of reference trust code changes;
wherein, each time the CTC provisions a secure element of the batch with the reference trust code, the CTC sends the timestamp assigned to reference trust code; and
wherein if the temporary trust code control is negative, the second secure element uses both the evolution velocity indicator and the timestamp assigned to its own temporary trust code for performing the risk assessment.

10. The method according to claim 1, wherein each secure element of the batch comprises their own purse balance (217) of a digital currency and their own transaction log (214);
wherein the point to point transaction is a transfer of value from the first secure element acting as a payer to the second secure element acting as payee; and
wherein if the second secure element accepts the point to point transaction, the second secure element updates both its own transaction log and an internal representation of its own purse balance with said transaction information.

11. The method according to claim 1, wherein each of the secure elements of the batch is one of the following types: smart card, ring, keychain and bracelet.

12. A system (50) comprising a batch of hardware secure elements (21, 22, 23) comprising their own temporary trust code (211),
wherein when a trusted point-to-point transaction occurs between a first and a second secure elements (22, 23), both belonging to the batch, the first secure element is configured to compute a result of a one-way cryptographic function applied to the temporary trust code stored in said first secure element, then to send to the second secure element a transaction message (30) comprising said result and a transaction data;
wherein following receipt of the transaction message, the second secure element is configured to perform a temporary trust code control to verify whether the result has been computed using a temporary trust code equal to the temporary trust code stored in the second secure element;
wherein if the temporary trust code control is positive, the second secure element is configured to accept the point-to-point transaction; and
wherein if the temporary trust code control is negative, depending on a risk assessment performed by the second secure element, the second secure element is configured to reject or accept the point-to-point transaction.

13. The system according to claim 12, wherein the system comprises a central transaction collector (10), CTC, configured to set a reference trust code (11) then to initialize the temporary trust code of all secure elements of the batch with said reference trust code;
wherein the CTC is configured to maintain a blacklist (12) of secure elements deemed to be compromised;
wherein when a predefined event occurs, the CTC is configured to update the reference trust code (11) with a different value;
wherein when an online channel is established between the CTC and a connected secure element (21) belonging to the batch, the CTC is configured to provision the connected secure element with the reference temporary trust code only if the secure element does not belong to the blacklist.

14. The system according to claim 13, wherein when said online channel is established between the CTC and said connected secure element (21), the CTC is configured to retrieve the transaction log (214) of the connected secure element and to apply a correlation check to the retrieved transaction log; and
wherein if the correlation check shows that the connected secure element is fraudulent, then the CTC is configured to include the connected secure element in the blacklist.

15. The system according to claim 12, wherein each secure element of the batch comprises their own purse balance (217) of a digital currency and their own transaction log (214);
wherein the point-to-point transaction is a transfer of value from the first secure element acting as a payer to the second secure element acting as payee; and
wherein if the second secure element accepts the point to point transaction, the second secure element is configured to update both its own transaction log and its own purse balance with said transaction information.
